# EUROPÄISCHE PATENTANMELDUNG

(11) **EP 3 848 732 A1**
(43) Veröffentlichungstag der Anmeldung: **14.07.2021**
(21) Anmeldenummer: 20167122.9
(22) Anmeldetag: 31.03.2020
(51) Int. Cl.: G01V 3/28, E21B 47/0228, E21B 47/13

(54) **ELEKTRONISCHE SONDE FÜR BOHRKÖPFE**

(30) Priorität: 10.01.2020 RU 2020101289
(71) Anmelder: Chmil, Sergey Nikolaevich, Chelyabinsk 454081 (RU)
(72) Erfinder: Chmil, Sergey Nikolaevich, Chelyabinsk 454081 (RU)
(74) Vertreter: Jeck, Anton

(57) **Zusammenfassung**

Die Erfindung betrifft eine elektronische Sonde für Bohrköpfe, die einen Stromspannungsblock, einen Neigungswinkelsensor und einen Drehzahlsensor eines Bohrinstruments enthält, die durch Ausgänge mit dem Eingang eines Steuerblocks verbunden sind, wobei sein Ausgang durch einen Leistungsantennenverstärker mit einer Sendeantenne verbunden ist und die Sendeantenne aus einer Spule besteht, die auf einem Magnetleiter mit nanokristallischer Struktur angeordnet ist. Der Magnetleiter ist in Form eines Stabs aus einer Verbund-Eisenlegierung ausgebildet.

## Beschreibung

Die Erfindung betrifft eine elektronische Sonde für Bohrköpfe und bezieht sich auf die Bohrindustrie, insbesondere auf die Ortungseinrichtung für die Richtungsbohrung. Sie kann in elektronischen Sonden eingesetzt werden, die bei der horizontalen Richtungsbohrung im Kopf eines Bohrinstruments angeordnet werden.

Bekannt ist eine elektronische Sonde für Bohrköpfe, RU163669, die im Kopf des Bohrinstruments angeordnet ist. Die angegebene elektronische Sonde für Bohrköpfe enthält einen Neigungswinkelsensor und einen Drehzahlsensor des Bohrinstruments. Sie sind durch Ausgänge mit einem Steuerblock verbunden. Der Steuerblock besteht aus einem Signalverarbeitungsblock der Sensoren auf Basis eines Mikrocontrollers und einem Signalbildungsblock zur Magnetantennenerregung. Sein Eingang ist an den Ausgang des Signalverarbeitungsblocks der Sensoren angeschlossen, und sein Ausgang, der ein Ausgang des Steuerblocks ist, ist durch einen Leistungsantennenverstärker mit einer Sendeantenne verbunden. Der Signalbildungsblock der Antennenerregung ist auf einem separaten Mikrocontroller ausgeführt, der in die Sonde zusätzlich eingeführt ist. Der Ausgang des Neigungswinkelsensors und der Ausgang des Drehzahlsensors sind ebenfalls direkt an die Eingänge des Signalbildungsblocks angeschlossen. Die elektronische Sonde ist mit einem Stromspannungsblock von einer eingebauten oder externen Quelle versorgt.

Ein Nachteil der bekannten elektronischen Sonde für Bohrköpfe ist ihre mangelnde Funktionssicherheit aufgrund der geringen Festigkeit des Antennenmagnetleiters. Beim Betrieb des Bohrinstruments hat die in seinem Kopf angeordnete elektronische Sonde, wie alle Elemente der Sonde, mechanische Stoßbelastungen zu ertragen, was zu Schäden des Antennenmagnetleiters führt und als Folge zum Ausfall der Antenne und zur Außerbetriebsetzung der gesamten elektronischen Sonde.

Es ist Aufgabe der Erfindung, die Sicherheit im Betrieb der elektronischen Sonde für Bohrköpfe zu erhöhen.

Ein technisches Ergebnis, das die angegebene Aufgabe lösen kann, ist die Festigkeitserhöhung des Antennenmagnetleiters.

Das Ergebnis wird folgendermaßen erreicht:
1. In einer elektronischen Sonde für Bohrköpfe (sie enthält einen Stromspannungsblock, einen Neigungswinkelsensor und einen Drehzahlsensor des Bohrinstruments, die durch Ausgänge mit dem Eingang des Steuerblocks verbunden sind, sein Ausgang ist durch den Leistungsantennenverstärker mit der Sendeantenne verbunden) besteht die Sendeantenne gemäß der Erfindung aus einer Spule, die auf einem Magnetleiter mit nanokristallischer Struktur angeordnet ist, der in Form eines Stabs aus einer Verbund-Eisenlegierung ausgeführt wird.
2. In der elektronischen Sonde nach Anspruch 1 der Erfindung hat der Stab aus einer Verbund- Eisenlegierung einen Querschnitt in Form eines Kreises.
3. In der elektronischen Sonde nach Anspruch 1 der Erfindung hat der Stab aus einer Verbund-Eisenlegierung einen Querschnitt in Form eines regelmäßigen Vielecks.

Die Ausführung der Sendeantenne besteht aus einer Spule, die auf einem Magnetleiter mit nanokristallischer Struktur angeordnet ist, der in Form eines Stabs aus einer Verbund-Eisenlegierung ausgeführt wird. Das ermöglicht, die Festigkeit des Antennenmagnetleiters und somit die Funktionssicherheit einer elektronischen Sonde für Bohrköpfe zu erhöhen. Dabei kann der Stab aus einer Verbund-Eisenlegierung einen Querschnitt in Form eines Kreises oder eines regelmäßigen Vielecks aufweisen.

Die angebotene Gesamtheit der wesentlichen Merkmale erteilt der angemeldeten elektronischen Sonde neue Eigenschaften, die die Lösung der gestellten Aufgabe ermöglichen. Die vorliegende elektronische Sonde für Bohrköpfe ist neu im Vergleich zum Prototyp. Die Unterschiede sind:
1. Die Sendeantenne besteht aus einer Spule, die auf einem Magnetleiter mit nanokristallischer Struktur angeordnet ist, der in Form eines Stabs aus einer Verbund-Eisenlegierung ausgeführt wird.
2. Der Stab aus einer Verbund-Eisenlegierung hat einen Querschnitt in Form eines Kreises.
3. Der Stab aus einer Verbund-Eisenlegierung hat einen Querschnitt in Form eines regelmäßigen Vielecks.

Die vorliegende Erfindung kann in der Bohrindustrie, insbesondere in einer Ortungseinrichtung für die Richtungsbohrung, eine breite Anwendung finden. Sie kann in elektronischen Sonden eingesetzt werden, die in einem Kopf des Bohrinstruments bei horizontaler Richtungsbohrung angeordnet werden. Aus diesem Grunde entspricht die Erfindung dem Kriterium "industrielle Anwendbarkeit".

Die Erfindung wird nun durch ein Ausführungsbeispiel in Verbindung mit einer Zeichnung näher erläutert, in der ein Gesamtbild der elektronischen Sonde für Bohrköpfe dargestellt ist.

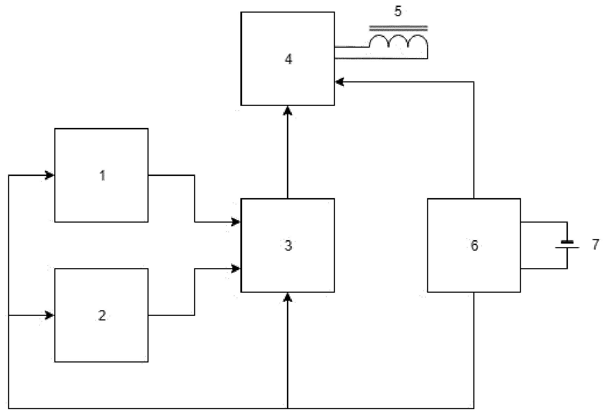

Die in der Zeichnung dargestellte elektronische Sonde enthält einen Neigungswinkelsensor 1 und einen Drehzahlsensor 2 eines Bohrinstruments, die durch Ausgänge mit einem Steuerblock 3 verbunden sind. Der Ausgang des Steuerblocks 3, der auf Basis eines Mikrocontrollers ausgeführt ist, ist durch einen Leistungsantennenverstärker 4 mit einer Sendeantenne 5 verbunden. Die elektronische Sonde ist mit einem Stromspannungsblock 6 von einer eingebauten oder externen Quelle versorgt.

Die Stromspannung vom Ausgang des Blocks 6 ist an alle Elemente der Sonde verlegt.

Die Magnetsendeantenne 5 besteht aus einer Spule, die auf einem Magnetleiter mit nanokristallischer Struktur angeordnet ist (in der Zeichnung nicht dargestellt), die in Form eines Stabs aus einer Verbund-Eisenlegierung HW 414 (Hybridwerkstoff) ausgeführt ist. Der Stab aus einer Verbund-Eisenlegierung HW 414 hat einen Querschnitt in Form eines Kreises, kann aber auch einen Querschnitt in Form eines regelmäßigen Vielecks haben, z. B. eines Quadrats, eines Sechs- oder Achtecks.

Die Ausführung aller Teile der elektronischen Sonde für Bohrköpfe ist herkömmlich (traditionell), und alle Teile werden zum vorgesehenen Gebrauch verwendet.

Die elektronische Sonde für Bohrköpfe funktioniert wie folgt:
Vor der Arbeit wird die elektronische Sonde innerhalb des Bohrkopfs für horizontale Bohrung befestigt (auf der Zeichnung nicht dargestellt). Vor dem Einschalten wird die Sonde im Raum in einer Lage aufgestellt, die dem Einschalten der richtigen Frequenz entspricht, die im Programm des Mikrocontrollers des Steuerblocks 3 angegeben ist. Beim Einschalten der Sonde gelangt die Speisespannung vom Ausgang des Blocks 6 an alle Elemente der Sonde.

Nach dem Einschalten werden bei der Initialisierung des Mikrocontrollers des Steuerblocks 3 die Bedingungen für die Bildung der ausgewählten Frequenz überprüft, die durch die Werte der Ausgangssignale der Sensoren 1 und 2 bestimmt werden. Die Signale aus den Sensoren 1 und 2 des Neigungswinkels und des Drehens des Bohrinstruments, deren Größen eine Raumlage der Sonde kennzeichnen, kommen an die Eingänge des Steuerblocks 3, wo sie bearbeitet werden und wo ein Signal zur Erregung der Magnetsendeantenne 5 erzeugt wird. Dieses Signal vom Ausgang des Blocks 3 gelangt durch den Leistungsantennenverstärker 4 zur Magnetsendeantenne 5, die an den Bodenempfänger (in der Zeichnung nicht dargestellt) ein Signal sendet, das eine Raumlage der Sonde kennzeichnet, die im Bohrkopf liegt.

Die vorliegende elektronische Sonde für Bohrköpfe ist im Vergleich zum Prototyp durch die Erhöhung der Festigkeit des Magnetleiters der Antenne sicherer im Betrieb.

## Patentansprüche

1. Elektronische Sonde für Bohrköpfe, die einen Stromspannungsblock, einen Neigungswinkelsensor und einen Drehzahlsensor eines Bohrinstruments enthält, die durch Ausgänge mit dem Eingang eines Steuerblocks verbunden sind, wobei sein Ausgang durch einen Leistungsantennenverstärker mit einer Sendeantenne verbunden ist und die Sendeantenne aus einer Spule besteht, die auf einem Magnetleiter mit nanokristallischer Struktur angeordnet ist,
**dadurch gekennzeichnet,**
**dass** der Magnetleiter in Form eines Stabs aus einer Verbund-Eisenlegierung ausgebildet ist.

2. Sonde nach Anspruch 1,
**dadurch gekennzeichnet,**
**dass** der Querschnitt des Stabs achsensymmetrisch ist.

3. Sonde nach Anspruch 1,
**dadurch gekennzeichnet,**
**dass** der Querschnitt des Stabs kreisförmig ist oder die Form eines regelmäßigen Vielecks aufweist.
